# EUROPEAN PATENT SPECIFICATION

(11) **EP 2 856 325 B1**
(45) Date of publication and mention of the grant of the patent: **15.11.2017**
(21) Application number: 12723506.7
(22) Date of filing: 25.05.2012
(51) Int. Cl.: G06F 17/30

(54) **A MULTI-CLIENT MULTI MEMORY CONTROLLER IN A HIGH SPEED DISTRIBUTED MEMORY SYSTEM**
STEUERUNG FÜR MEHRERE CLIENTS UND MEHRERE SPEICHER IN EINEM VERTEILTEN HOCHGESCHWINDIGKEITSSPEICHERSYSTEM
CONTRÔLEUR MULTI-MÉMOIRE MULTI-CLIENT DANS UN SYSTÈME DE MÉMOIRE RÉPARTIE À GRANDE VITESSE

(43) Date of publication of application: 08.04.2015
(73) Proprietor: Huawei Technologies Co., Ltd., Longgang, Shenzhen, Guangdong 518129 (CN)
(72) Inventor: GROSS, Yoram, 80992 Munich (DE)
(74) Representative: Kreuz, Georg Maria
(86) International application number: PCT/EP2012/059844
(87) International publication number: WO 2013/174443

(56) References cited:
- US-A1- 2004 186 945
- US-A1- 2006 077 750
- US-A1- 2007 100 826

## Description

### TECHNICAL BACKGROUND

The invention relates to a multi-client multi memory controller for providing memory operations to clients of a client group in a high speed distributed memory system and to a method for maintaining data coherency between distributed databases.

There are situations where it is necessary to keep the same database on more than one location but keeping these databases always updated. In a possible situation a group of clients shall share the same database but a single memory device cannot fulfill the aggregate memory bandwidth which is required for both read and write operations on the memory device. Another situation is when the client group contains a single client which requires a higher memory bandwidth than a single memory device of a memory device array can provide.

In both cases there is a need to replicate the database on multiple memory devices forming a memory device array. When keeping data as replication data on distributed multiple memory devices it is necessary to preserve the data base coherency. Usually, a distributed memory system is not symmetric in terms of the bandwidth required by each client, the bandwidth capability of each memory device and the complex memory device array structure which can comprise different types of memory devices such as SRAM, RLDRAM or DDR memory devices.

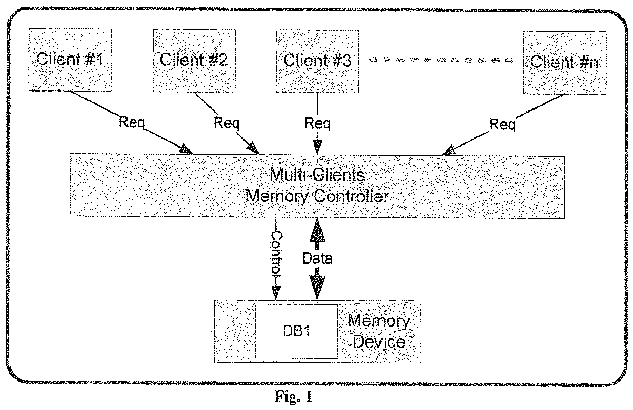

Fig. 1 illustrates a conventional multi-client memory system (MCM) where a client group (CG) comprising a predetermined number n of clients is connected to a multi-client memory controller (MCMC) having access to a memory device (MD). The regular multi-client memory controller (MCMC) is not limited by the bandwidth of the memory device, however, the multi-client memory controller is adapted to handle temporary congestions and arbitrating the client memory access requests. When a single memory device connected to the multi-client memory controller (MCMC) cannot provide the required bandwidth, for example in the above-mentioned situations there is a need to replicate the databases and to put them in separate memory devices (MD). This set of memory devices forms a memory device array (MDA).

The memory device array can form a bottleneck in the system performance. Techniques to expedite system performance involve data replication. However, there is always a need to maintain data coherency between replications such that all clients get an up-to-date database from the memory device array. Accordingly, there is a need to provide a method and/or an apparatus to speed up memory and system performance through replication of data while providing at the same time a coherent database for all clients.

US 2004-0186945 A1 discloses a dynamic addressing technique which mirrors data across multiple banks of a memory resource. Information stored in the memory banks is organized into separately addressable blocks, and memory addresses include a mirror flag. To write information mirrored across two memory banks, a processor issues a single write transaction with the mirror flag asserted. To read data that has been mirrored across two memory banks, the processor issues a read with the mirror flag asserted.

### SUMMARY OF THE INVENTION

The invention provides according to a first implementation of a first aspect a multi-client multi memory controller for providing memory operations to clients of a client group,
said multi-client multi memory controller having access to a memory device array represented by virtual memory units arranged in rows and columns,
wherein the number of rows is equal to the number of the clients of a client group and
the number of columns is equal to the number of clients of said client group adapted to write data to said memory device array,
wherein said multi-client multi memory controller is adapted to write in response to a client write request received from a first client of said client group the updated
information of said first client as replication data entries to all virtual memory units of the column associated to the first client,
wherein said multi-client multi memory controller is adapted to read in response to a client read request received from a second client of said client group the stored replication data entries from all virtual memory units of the row associated to the second client and to provide the most recently updated replication data entry to the second client.

In a possible second implementation of the multi-client multi memory controller according to the first aspect of the present invention said multi-client multi memory controller has access to an operation mapping matrix stored in a data storage.

In a possible third implementation of the second implementation of the multi-client multi memory controller according to the first aspect of the present invention the operation mapping matrix provides a mapping between the clients of the client group and memory devices of said memory device array.

In a further fourth implementation of the first to third implementation of the multi-client multi memory controller according to the first aspect of the present invention each virtual memory unit of the memory device array provides a bandwidth which corresponds to the aggregated bandwidth required by a read operation of a first client and by a write operation of a second client represented by the virtual memory unit of the memory device array.

In a possible fifth implementation of the first to fourth implementation of the multi-client multi memory controller according to the first aspect of the present invention the multi-client multi memory controller is adapted to write in response to a client write request received from a first client of said client group the updated information along with a time slot indicating a dedicated time period for a client memory operation as replication data entries to all virtual memory units of the column associated to the first client.

In a possible sixth implementation of the first to fifth implementation of the multi-client multi memory controller according to the first aspect of the present invention the multi-client multi memory controller is adapted to read in response to a client read request received from a second client of said client group the stored replication data entries along with the time slots in all virtual memory units of the row associated to the second client.

In a possible seventh implementation of the sixth implementation of the multi-client multi memory controller according to the first aspect of the present invention the multi-client multi memory controller is further adapted to select the most recently updated replication data entry on the basis of the time slots of the read replication data entries.

In a possible eighth implementation of the seventh implementation of the multi-client multi memory controller according to the first aspect of the present invention the selected most updated replication data entry is provided by the multi-client multi memory controller to the second client.

In a possible ninth implementation of the multi-client multi memory controller according to the first aspect of the present invention the multi-client multi memory controller comprises for each memory device of said memory device array a set of FIFO subunits.

In a possible tenth implementation of the ninth implementation of the multi-client multi memory controller according to the first aspect of the present invention the FIFO subunits of the multi-client multi memory controller are provided to hold received client memory operation requests for each time slot dedicated to at least one client memory operation in the respective memory device.

In a possible eleventh implementation of the ninth or tenth implementation of the multi-client multi memory controller according to the first aspect of the present invention the multi-client multi memory controller comprises for each memory device of the memory device array an arbiter connected to the set of FIFO subunits of said memory device.

In a possible twelfth implementation of the eleventh implementation of the multi-client multi memory controller according to the first aspect of the present invention the arbiter is adapted to generate a read command or a write command supplied to a memory controller of said memory device if a time slot comprises a pending client memory operation request.

In a possible thirteenth implementation of the first to twelfth implementation of the multi-client multi memory controller according to the first aspect of the present invention the multi-client multi memory controller comprises a multicast fix connection matrix which is adapted to hardwire client memory operation requests received from a client to all time slot FIFO subunits that serve its data replication.

In a possible fourteenth implementation of the first to thirteenth implementation of the multi-client multi memory controller according to the first aspect of the present invention the multi-client multi memory controller comprises a unicast fix reverse connection matrix adapted to translate every set of memory device number and time slot number to a location in a cache memory where the replication data entries and a coherency state are stored.

In a possible fifteenth implementation of the first to fourteenth implementation of the multi-client multi memory controller according to the first aspect of the present invention the multi-client multi memory controller comprises a coherency state write machine adapted to read upon a write operation request replications states of the replication data entries and to update the replication states for the mapped memory devices.

In a possible sixteenth implementation of the first to fifteenth implementation of the multi-client multi memory controller according to the first aspect of the present invention the multi-client multi memory controller comprises a coherency state read machine adapted to receive upon a read operation request all replication data entries from the mapped memory devices and to select the most updated replication data entry.

According to a first implementation of a second aspect of the present invention a high speed distributed memory system is provided comprising:
a multi-client multi memory controller according to the first aspect of the present invention and
a client group comprising a number of clients connected to said multi-client multi memory controller and
a number of memory devices of a memory device array connected to said multi-client multi memory controller.

In a possible second implementation of the high speed distributed memory system according to the second aspect of the present invention all clients of said client group are adapted to read data from said memory device array in a read operation and wherein a portion of the clients of said client group are adapted to write data to said memory device array in a write operation.

According to a first implementation of a third aspect of the present invention a method for maintaining data coherency between databases distributed on memory devices of a memory device array represented by virtual memory units arranged in rows and columns is provided,
wherein in response to a client write request updated information of said first client is written as replication data entries to all virtual memory units of a column associated to the first client,
where in response to a client read request stored replication data entries from all virtual memory units of a row associated to the second client are read to provide the most recently updated replication data entry of the second client.

In a possible second implementation of the method according to the third aspect of the present invention in response to a client write request the updated information is written along with a time slot indicating a dedicated time period for a client memory operation as replication data entries to all virtual memory units of the column associated to the first client.

In a possible third implementation of the first or second implementation of the method according to the third aspect of the present invention in response to a client read request the stored replication data entries along with the time slots in all virtual memory units of the row associated with the second client are read and selected on the basis of the time slots to provide the most recently updated replication data entry to the second client.

In a possible implementation, the first client and the second client can be the same one.

In a further possible implementation, the first client can issue an write request and the second client can issue a read request, or the first client can issue a read request and the second client can issue a write request.

### BRIEF DESCRIPTION OF FIGURES

In the following possible implementations of different aspects of the present invention are described with reference to the enclosed figures in more detail.
- Fig. 1: shows a conventional multi-client memory system architecture;
- Fig. 2: shows a block diagram of a possible implementation of a high speed distributed memory system according to a second aspect of the present invention comprising a multi-client multi memory controller according to a first aspect of the present invention;
- Fig. 3: shows a diagram for illustrating virtual memory units as used by the multi-client multi memory controller of the method according to the second and third aspect of the present invention for maintaining data coherency between data bases distributed on memory devices of a memory device array;
- Fig. 4: shows a diagram for illustrating a mapping of virtual memory units to different memory devices of a memory device array as performed by the multi-client multi memory controller and by the method for maintaining data coherency according to the second and third aspect of the present invention;
- Fig. 5: shows a further diagram for illustrating a further example of an array of virtual memory units as used by a multi-client multi memory controller and by a method for maintaining data coherency between data bases according to the second and third aspect of the present invention;
- Fig. 6: shows a further diagram for illustrating a mapping of virtual memory units as shown in Fig. 5 to memory devices of a memory device array;
- Fig. 7: shows a further diagram for illustrating the mapping of virtual memory units to memory devices of a memory device array performed by a multi-client multi memory controller and by a method for maintaining data coherency between databases according to the second and third aspect of the present invention;
- Fig. 8: shows a diagram for illustrating virtual memory units controlled by a multi-client multi memory controller and a method for maintaining data coherency between databases according to the first and second aspect of the present invention;
- Fig. 9: shows a diagram for illustrating a mapping of virtual memory units to memory devices of a memory device array as employed by a multi-client multi memory controller and a method for maintaining data coherency between databases according to the first and second aspect of the present invention;
- Fig. 10: shows a diagram for illustrating a mapping as performed by a multi-client multi memory controller and a method for maintaining data coherency between databases according to the first and second aspect of the present invention;
- Fig. 11: shows a further diagram for illustrating a mapping as employed by a multi-client multi memory controller and by a method for maintaining data coherency between databases according to the first and second aspect of the present invention;
- Fig. 12: shows a block diagram of a possible implementation of a multi-client multi memory controller according to the first aspect of the present invention.

### DETAILED DESCRIPTION OF EMBODIMENTS

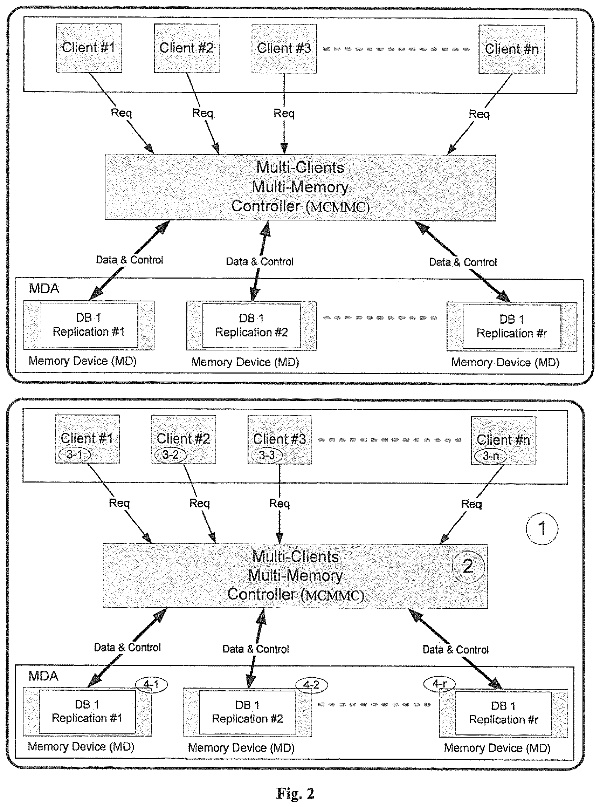

As can be seen in Fig. 2 a high speed distributed memory system 1 according to the second aspect of the present invention can comprise a multi-client multi memory controller 2 according to the first aspect of the present invention to which several clients 3-1, 3-2, 3-3 ... 3-n are connected, for example, via a data network. The clients 3-1 to 3-n form a client group (CG) consisting of the number n of clients. The high speed distributed memory system 1 further comprises a number r of memory devices 4-1, 4-2, 4-r of a memory device array (MDA) connected to said multi-client multi memory controller 2. A set or group of clients requires a memory service from a set of memory devices 4-i (0<i<r, wherein i is an integer larger than 0 and smaller than r) in a memory device array MDA controlled by the multi-client multi memory controller 2. The multi-client multi memory controller 2 can pose a standard memory device towards each client 3-i (0<i<n, wherein i is an integer larger than 0 and smaller than n) of the client group CG and can pose as a single client towards each memory device 4-i of the memory device array MDA.

The clients 3-i of the client group CG are formed by physical entities connected to the multi-client multi memory controller 2 and receive memory services. The client group CG is a set of clients 3-i sharing a common database as shown in Fig. 2. All clients 3-i in the client group CG are connected to the same multi-client multi memory controller 2 of the high speed distributed memory system 1. Each of the clients 3-i comprises a different private memory interface connecting the respective client to the multi-client multi memory controller 2. The number n of clients within the client group CG can vary depending on the application of the system.

The memory device 4-i within the memory device array MDA can be formed by a physical memory device or by a sector in a memory device for example a bank in a DDR memory device. A memory device can consist of one or more virtual memory units VMUs representing the memory devices within the memory device array MDA.

A time slot (TS) is a time period dedicated to a memory device (MD), i.e. a TS is a period assigned per memory device MD and may be different for each memory device MD in the memory device array MDA. In a dedicated time slot TS, a client read/write operation can be performed on the memory device MD in the memory device array MDA.

A specific client operation in a memory device 4-i of the memory device array MDA can be indicated by a time slot TS indicating a time period dedicated to the respective client operation. The memory device array MDA is formed by a set of memory devices 4-i in order to provide a higher bandwidth virtual memory that supports the client group CG consisting of the n clients 3-i. The number r of memory devices in the memory device array MDA can vary depending on the application of the high speed distributed memory system 1.

The multi-client multi memory controller 2 of the high speed distributed memory system 1 forms a unit which manages multiple memory devices 4-i of the memory device array MDA and provides memory services to the clients 3-i of the client group CG. The memory device array MDA is represented by virtual memory units (VMUs) which are used by the multi-client multi memory controller 2 to provide the memory services to the clients 3-i of the client group CG. The virtual memory unit VMU is a logical entity which can provide write services to a unique client 3-i and read services for a unique client of the client group CG. The second client and the first client may or may not be the same client. The virtual memory units VMUs are created for performing a method for maintaining data coherency between databases distributed on the different memory devices 3-i of the memory device array MDA represented by the virtual memory units VMUs arranged in rows and columns.

In the high speed distributed memory system 1 as shown in Fig. 2 all clients 3-i of the client group CG connected to the multi-client multi memory controller 2 can require a read service from the multi-client multi memory controller 2 while only a portion m (m ≤ n) of the client 3-i of the client group CG can require a write service from the multi-client multi memory controller 2. Accordingly, all clients 3-i of the client group CG are adapted to read data from the memory device array MDA in a read operation and only a portion of the clients of the client group CG is adapted to write data to the memory device array MDA in a write operation.

The multi-client multi memory controller 2 has access to the memory device array MDA represented by virtual memory units VMUs arranged in rows and columns. In a possible implementation the number of rows in this matrix may be equal to the number n of clients 3-i of the respective client group CG as shown in Fig. 2. The number of columns in the matrix may be equal to the number m of those clients of said client group CG adapted to write data to the memory device array MDA.

The multi-client multi memory controller 2 is adapted to write in response to a client write request (WR) received from a client 3-i of the client group CG the updated information of the first client as replication data entries to all virtual memory units VMUs of the column associated to the respective first client. The updated information of a client may be any new or changed information comparing the stored information.

Moreover, the multi-client multi memory controller 2 is adapted to read in response to a client read request (RR) received from a client 3-i of the client group CG the stored replication data entries from all virtual memory units VMUs of the row associated to the respective requesting client and to provide the most recently updated replication data entry to the respective requesting client 3-i. In a possible implementation the multi-client multi memory controller 2 has access to an operation mapping matrix stored in a data storage. This data storage can be integrated in the multi-client multi memory controller 2. This operation mapping matrix provides a mapping between the clients 3-i of the client group CG and the memory devices 4-i of the memory device array MDA. Each virtual memory unit VMU of the memory device array can provide a bandwidth (BW) which corresponds to the aggregated bandwidth required by a read operation of a first client and by a write operation of a second client represented by the virtual memory unit VMU. The virtual memory unit VMU forms a basic logic entity in a way that an array of n x m virtual memory units VMUs can represent the memory device array MDA. After mapping or placing virtual memory units VMUs to the memory devices 4-i one gets a physical memory device array that does still have the same n x m matrix but with physical, not necessarily symmetrically, memory devices MD 4-i. The mapping of the virtual memory units VMUs to the memory devices 4-i can be performed in a possible embodiment according to each virtual memory unit VMU bandwidth BW requirement and each memory device MD bandwidth BW capability. As can be seen in Fig. 2, there are n clients 3-i, all of them require read services while only a portion of the clients 3-i gets write services too from the multi-client multi memory controller 2. In many cases, a single memory device 4-i cannot produce an aggregate required bandwidth of all clients 3-i. Further, the read and write bandwidth requirements of each client 3-i of the client group CG can vary. Moreover, the bandwidth BW capabilities of each memory device 4-i can also vary.

From the moment that a single memory device 4-i is not sufficient, there is a need to replicate the database into multiple memory devices creating the memory device array MDA. Since each memory device 4-i is not accessible by all clients because of the bandwidth BW limitation the memory device array MDA is built in a way that any client writes to several memory devices 4-i of the memory device array MDA and reads from several other clients in a way that any client reads data from all writing clients.

Accordingly, the multi-client multi memory controller 2 maps any client to its memory devices such that the memory device array MDA is mapped to all client group CG read and write services. This map building forms the distribution map building process.

Since each writing client 3-i of the client group CG writes the information or data at its own time, a reading client can choose the most updated information for further use or processing. This function forms a so-called coherency function. In the following the distribution map building is explained with reference to some simple exemplary embodiments.

In a first exemplary implementation there are only two clients 3-i that compose in a client group CG. Each client of the client group CG requires symmetric read and write services. Further, both clients require in this simple example the same bandwidth BW. A single memory device 4-i of the memory device array MDA can fulfill the bandwidth requirement of the single client in this example. The memory device 4-i is insensitive whether the request is a read request RR or a write request WR from a bandwidth point of view. Moreover, the memory device array MDA comprises a single memory device type from a bandwidth point of view. When two clients 3-i build a single client group CG, the number n of the clients is 2 (n = 2) in the given example. If the client requires symmetric read and write services, the number of first clients is also 2 (m = 2). Each client's read bandwidth is identical to each client's write bandwidth forming a bandwidth unit (1 BW unit). Since each memory device 4-i has a bandwidth of 4 in the given example, there are provided two time slots TSs for each client 3-i of the client group CG and total 4 TSs for the single memory device MD in the memory device array MDA.

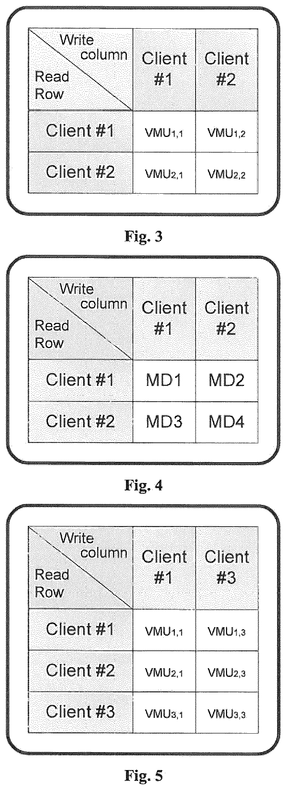

Fig. 3 illustrates a first step of a distribution map building process to build a n x m matrix consisting of virtual memory units VMUs arranged in two rows and two columns. In the example of Fig. 3 the number of rows is equal to the number n = 2 of the clients of the client group CG. Further, the number of columns is equal to the number m = 2 of the clients in the client group CG that are adapted to write data to the memory device array MDA. Each row represents a client read operation and each column of the matrix represents a client write operation. Accordingly, the n x m matrix comprises 2 x 2 virtual memory units VMUs as shown in Fig. 3. Every cell in the matrix is a virtual memory unit VMU which represents an atom memory unit that can provide read services to a single client and write services to a single client. For example, VMU_{1,1} serves client 1 for both reading and writing and VMU_{1,2} serves client 1 for reading and client 2 for writing.

In a further step of the distribution map building process the virtual memory units such as shown in Fig. 3 are mapped to physical memory devices of the memory device array MDA as illustrated by Fig. 4.

In the simple example each virtual memory unit VMU of the matrix shown in Fig. 3 are provided to support at least 2 bandwidth units, i.e. one bandwidth unit for a read operation and one bandwidth unit for a write operation. Since the memory device 4-i can provide in the given example up to two bandwidth units each virtual memory unit VMU is mapped to a different memory device MD 4-i as depicted in Fig. 4.

Accordingly, the mapping result is as follows:
Client 1 writes to memory device MD1 and memory device MD3,
Client 2 writes to memory device MD2 and memory device MD4,
Client 1 reads from memory device MD1 and memory device MD2, and
Client 2 reads from memory device MD3 and memory device MD4,
as can be seen from Fig. 4.

For example, client 2 can read from memory device MD3 which has been written by client 1 and can further read from memory device MD4 which has been written by client 2 itself. It has the information from all writing clients. The multi-client multi memory controller 2 as shown in Fig. 2 can provide a coherency function so that the client 2 has the capability to choose the most updated database.

The four memory devices MD1, MD2, MD3, MD4 as depicted in Fig. 4 can form four memory devices 4-1, 4-2, 4-3, 4-4 of the memory device MDA which can serve the client group CG comprising a first client 3-1 and a second client 3-2.

The time slot TS1 of memory device MD1 can serve client 3-1 for a read operation.
The time slot TS2 of memory device MD1 can serve client 3-1 for a write operation.
The time slot TS1 of memory device MD2 can serve client 3-1 for a read operation.
The time slot TS2 of memory device MD2 can serve client 3-2 of the client group CG for a write operation.
The time slot TS1 of memory device MD3 can serve client 3-2 for a read operation.
The time slot TS2 of memory device MD3 can serve client 3-1 for a write operation.
The time slot TS1 of memory device MD4 can serve client 3-2 for a read operation.
The time slot TS2 of memory device MD4 can serve client 3-2 for a write operation.

In the above example, each client 3-i requires symmetric read and write services. Both clients 3-1 and 3-2 are able to perform a read and a write operation.

However, the high speed distributed memory system 1 according to the present invention as shown in Fig. 2 is not restricted to this but can be used also for asymmetric clients. For example, a possible high speed distributed memory system 1 can be provided for a client group CG comprising three clients 3-1, 3-2, 3-3, two of which are writing clients adapted to write data to the memory device array MDA in a write operation. Accordingly, in this exemplary second example, there are three clients 3-1, 3-2, 3-3 where two clients 3-1, 3-3 require a symmetric read and write service and only one client, for example client 3-2, requires only read services. Further, all clients 3-i can require the same bandwidth BW. Further, in this example, a single memory device 4-i can provide a bandwidth with three bandwidth BW units. The memory device 4-i is insensitive whether the request is a read request RR or write request WR from a bandwidth point of view. Further, in the given example, a single memory device type from the bandwidth point of view is used in the memory device array MDA. Accordingly, the number n of second clients is in the given example three (n = 3) and the number m of first clients is two (m = 2). Each client read bandwidth is equal to the client write bandwidth corresponding to one bandwidth unit. Since each memory device 4-i offers in the given example a bandwidth BW = 3 each memory device 4-i can offer three time slots TS.

In a first step in the distribution map building process a n x m matrix is formed. Accordingly, in the given example, a matrix of 3 x 2 is built where each row represents a client read operation and each column represents a client write operation as depicted in Fig. 5.

Fig. 5 shows a matrix consisting of six virtual memory units VMUs. Since the second client 3-2 only requires read services and no write operations there are no virtual memory units VMU_{i,2} as there are no write operations for the second client 3-2. Accordingly, a column in the matrix for the second client 3-2 is not provided in the matrix shown in Fig. 5.

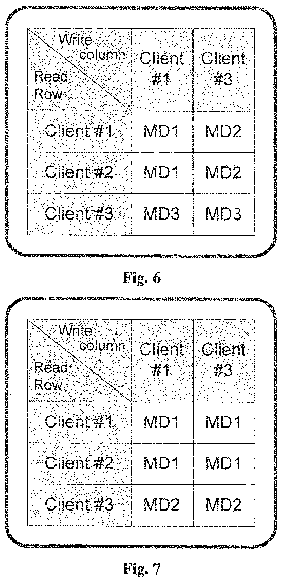

In a further step of the distribution map building process the virtual memory units VMUs are mapped to the memory devices MD 4-i of the memory device array MDA. Because of the symmetric system, each virtual memory unit VMU does have to support at least two bandwidth units, i.e. one for the read operation and one for the write operation. Since the memory devices 4-i can provide up to three bandwidth units BUs one can choose virtual memory unit VMU_{1,1} and virtual memory unit VMU_{2,1} as a set of virtual memory units VMUs that construct the first memory device MD1 as depicted in Fig. 6.

From a point of view of the physical first memory device MD1 i.e. memory device 4-1 of the memory device array MDA this memory device 4-1 serves the first client 3-1 for both read and write operations and the second client 3-2 for read operations. The total bandwidth provided by the first memory device 4-1 comprises three bandwidth units (BW unit = 3).

Accordingly, the mapping results in this example are as follows:
Client 3-1 writes to memory devices MD1 and MD3,
Client 3-3 writes to memory devices MD2 and MD3,
Client 3-1 reads from memory devices MD1 and MD2,
Client 3-2 reads from memory devices MD 1 and MD2, and
Client 3-3 reads from memory device MD3,
as depicted in Fig. 6.

If, for example, client 3-2 reads from memory device MD1 which has been written by client 3-1 and memory device MD2 which has been written by client 3-3 it has the information from all writing clients. The multi-client multi memory controller 2 provides a coherency function to the client 3-2 which has the capability to choose the most updated database in the read replication data entries from memory device MD1 and MD2.

The three memory devices MD1, MD2, MD3 illustrated in the matrix of Fig. 6 compose the memory device array MDA which serves the above client group CG consisting of clients 3-1, 3-2, 3-3 where client 3-2 is only able to read but cannot perform a write operation.

Consequently, time slot TS1 of memory device MD1 can serve client 3-1 for read. Time slot TS2 of memory device MD1 can serve client 3-2 for reading.
Time slot TS3 of memory device MD1 can serve client 3-1 for writing.

Further, time slot TS1 of memory device MD2 can serve client 3-1 for reading. Time slot TS2 of memory device MD2 can serve client 3-2 for reading.
Time slot TS3 of memory device MD2 can serve client 3-2 for writing.

Moreover, time slot TS1 of memory device MD3 can serve client 3-3 for reading. Time slot TS2 of memory device MD3 can serve client 3-1 for writing.
Time slot TS3 of memory device MD3 can serve client 3-3 for writing.

A further example illustrates a high speed distributed memory system 1 where the memory device types of the memory devices 4-i can have different bandwidths BWs. For example, if there is a memory device of a first type with a bandwidth BW = 3, each memory device of this type can provide three time slots TS. If there is a memory device of a second type with a bandwidth BW = 4, each memory device of this type can provide four time slots TS. Provided that the client group consisting of the different clients 3-1, 3-2, 3-3 of the above example does not change, the distribution map building can be performed in the second step by mapping the virtual memory units VMUs to the memory devices as illustrated in Fig. 7. In this example, the virtual memory units VMU_{1,1}, VMU_{1,3}, VMU_{2,1} and VMU_{2,3} are constructed to fill memory device MD1 and the virtual memory units VMU_{3,1} and VMU_{3,3} construct a second memory device MD2.

Accordingly, in this example, two memory devices can compose the memory device array MDA and serve the clients 3-i of the above client group CG as follows:
Time slot TS1 of memory device MD1 serves client 3-1 for reading.
Time slot TS2 of memory device MD1 serves client 3-2 for reading.
Time slot TS3 of memory device MD2 serves client 3-1 for writing.
Time slot TS4 of memory device MD1 serves client 3-3 for writing.
Time slot TS1 of memory device MD2 serves client 3-3 for reading.
Time slot TS2 of memory device MD2 serves client 3-1 for writing.
Time slot TS3 of memory device MD2 serves client 3-3 for writing.

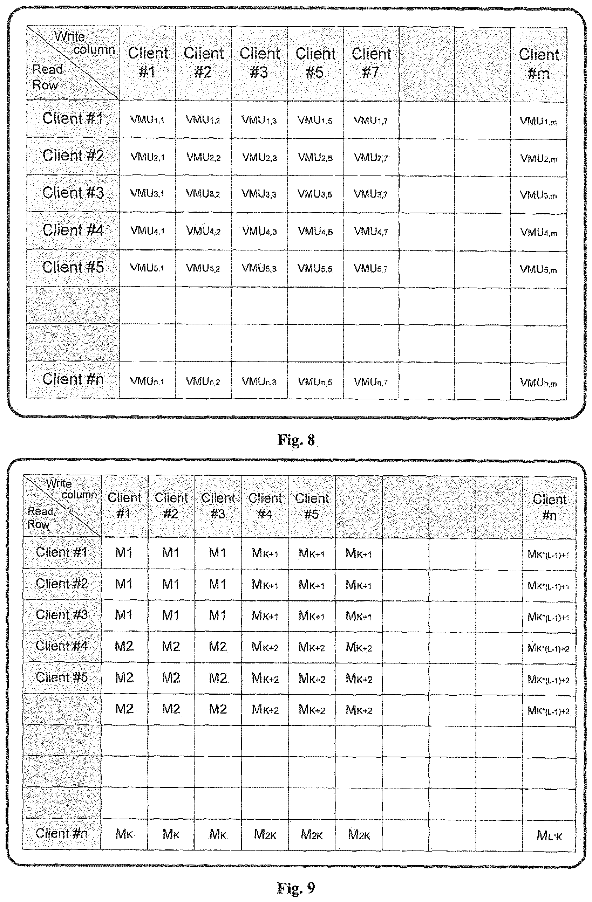

Fig. 8 shows a diagram for illustrating a general mapping process, wherein a n x m matrix is build having n rows for reading clients and m columns for writing clients. Each cell of the matrix shown in Fig. 8 is represented by a virtual memory unit VMU_{i,j} (0<i≤n, 0<j≤m, wherein i is an integer larger than 0 and smaller than n and j is an integer larger than 0 and smaller than m) which requires Rᵢ (0<i≤n, wherein i is an integer larger than 0 and smaller than n) read bandwidth units and Wⱼ (0<j≤m, wherein j is an integer larger than 0 and smaller than m) write bandwidth units. The virtual memory units VMUs are groomed in such a way that the aggregated clients bandwidth is smaller than the selected bandwidth of the memory device (clients BW ≤ selected MD BW). For each memory device MD every read or write of the same client 3-i of the client group CG is considered only once with a required bandwidth as the maximum bandwidth from all virtual memory units VMUs of the memory devices MD which are connected to the respective client.

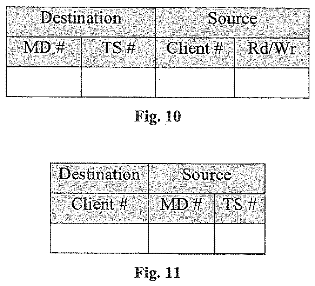

Fig. 9 illustrates a mapping for the general mapping process shown in Fig. 8. As can be seen the result is a set of read operations per client read request (Point to Multi-Points) and a set of write operations per client write request. Therefore, one can build the following map per destination (memory device number MD# and time slot number TS#) as shown in Fig. 10.

The source or client can appear in the shown table of Fig. 10 as many times as database replication it has for both read and write operations. Source means a set of client# and the read or write operations. For providing multiple clients services by a single memory device MD the time slot TS defines the time period where this client is being served. Each time slot TS can have a small buffer that keeps several asynchronous requests. It is possible to build a read data reverse map as shown in Fig. 11.

A source which is a time slot TS in a specific mobile device MD should appear in this table only once. Source means a set of mobile device MD# and time slot TS#. Each time slot TS can have a small buffer such as a cache or a register that keeps several read operation results until they are being served and deleted.

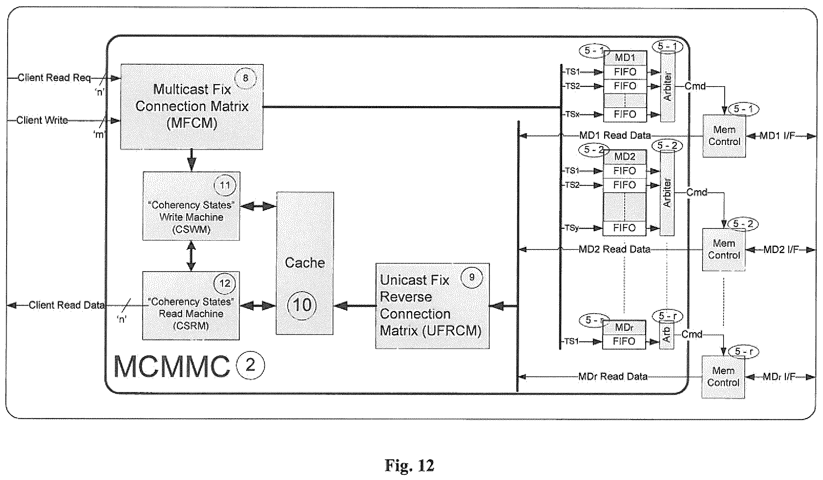

Fig. 12 shows a block diagram of a possible implementation of a multi-client multi memory controller 2 according to the first aspect of the present invention provided within a high speed distributed memory system 1 shown in Fig. 2 according to the second aspect of the present invention.

As can be seen from Fig. 12 the multi-client multi memory controller 2 comprises in the shown implementation for each memory device 4-i of the memory device array MDA a set of FIFO subunits 5-i for each memory device 4-i of the memory device array MDA. If the number of memory devices 4-i in the memory device array MDA = r, the number of FIFO subunits is also r. Accordingly, the multi-client multi memory controller 2 comprises in the shown implementation FIFO subunits 5-1, 5-2 ... 5-r as shown in Fig. 12. Each FIFO subunit 5-i (0<i≤r, wherein i is an integer larger than 0 and smaller than r) can comprise one or several FIFO registers as shown in the implementation of Fig. 12. Each FIFO subunit 5-i is provided to hold arriving client memory operation requests for each time slot TS dedicated to at least one client memory operation in the respective memory device 4-i for which the FIFO subunit 5-i is provided. The set of FIFO registers of FIFO subunits 5-i can hold any arriving memory operation request which may asynchronously arrive at any time until a corresponding arbiter 6-i chooses the appropriated time slot TS. Accordingly, the multi-client multi memory controller 2 comprises in the shown implementation for each memory device 4-i of the memory device array MDA an arbiter 6-i connected to the corresponding FIFO subunit 5-i as shown in Fig. 12. Each arbiter 6-i (0<i<r, wherein i is an integer larger than 0 and smaller than r) is adapted to generate a read command or a write command supplied to a memory controller 7-i (0<i≤r, wherein i is an integer larger than 0 and smaller than r) of the respective memory device 4-i. The arbiter 6-i subunit serves a memory device 4-i. It checks each time slot TS whether the time slot TS has any pending request. If the time slot TS comprises a pending request, the arbiter 6-i generates a standard read request or write command for the memory controller 7-i of the memory device 4-i. The arbiter 6-i sends the operation request to the memory controller 7-i that manages the memory device 4-i. The memory controller 7-i can be integrated in a memory device 4-i or connected to a memory device 4-i.

The multi-client multi memory controller 2 comprises in the shown implementation of Fig. 12 a multicast fix connection matrix (MFCM) 8 which is adapted to hardwire client memory operation requests received from a client 3-i to all time slot TS FIFO subunits that serve its data replication. This connection is a multicast connection (Point to Multi-Point).

Further, the multi-client multi memory controller 2 comprises in the shown implementation of Fig. 12 a unicast fix reverse connection matrix 9 which is adapted to translate every set of memory device number MD# and time slot number TS# to a fix location in a cache 10 of the multi-client multi memory controller 2 where the multi-client multi memory controller 2 keeps the data replications and the coherency states. The cache subunit 10 can save the replicated read data for three different purposes. It can collect the arriving replications until all replications are ready. Further, it can save all replication data until the write back operation occurs and then delete all replications or replication data entries. Further, the cache subunit 10 can synchronize multiple operations on the same data entry from various clients 3-i as long as the database is in a state between the above-mentioned two situations.

The multi-client multi memory controller 2 further comprises in the shown implementation of Fig. 12 a coherency state write machine (CSWM) 11 adapted to read upon a write operation request replications states of the replication data entries and to update the replication states for the map memory devices. The coherency state write machine 11 reads upon a database updating operation, e.g. a write operation, a state of the replication, modifies the state such that all other clients get an indication that it is the most updated replication and writes it on all required memory devices 4-i of the memory device array MDA.

The multi-client multi memory controller 2 further comprises in the shown implementation of Fig. 12 a multi coherency state read machine (CSRM) 12 which is adapted to receive upon a read operation request all replication data entries from the mapped memory devices MD and to select the most updated replication data entry. The coherency state read machine CSRM 12 waits for all replications to arrive from the respective memory devices and then defines and selects the most updated replication data entry for use. The coherency state read machine 12 detects the correct replication data entry and can emulate to the client 3-i a standard read response operation.

In every read operation the multi-client multi memory controller 2 reads data which has been written by other clients at various times. The multi-client multi memory controller 2 keeps information data that indicates which of the clients 3-i has written the most updated replication data entry. In most cases the replication data entries do not contain the same data since they have been modified at different times. The coherency information data provided by the multi-client multi memory controller 2 can be different for any atom data unit (DU). This means that the coherency information data can never be read or written partially. Accordingly, the coherency information data can be written in a possible implementation in the memory devices. If a client 3-i needs to update a data unit DU then it has to modify the coherency information data (CI) such that all other clients know to choose its replication.

With the high speed distributed memory system 1 according to the present invention multiple memory devices 4-i can serve multiple clients of a client group CG even if each client requires a different bandwidth. Some clients 3-i may require almost the same bandwidth than a memory device can provide whereas some clients 3-i may require less bandwidth than a memory device 4-i can provide.

## Claims

1. A multi-client multi memory controller (2) for providing memory operations to clients of a client group, CG,
said multi-client multi memory controller (2) having access to a memory device array, MDA, represented by virtual memory units, VMUs, arranged in rows and columns,
wherein the number of rows is equal to the number (n) of the clients of the CG adapted to read data from said MDA and
the number of columns is equal to the number (m) of the clients of said CG adapted to write data to said MDA,
wherein said multi-client multi memory controller (2) is adapted to write in response to a client write request, WR, received from a first client (3-i) of said CG updated information of said first client as replication data entries to all virtual memory units, VMUs, of the column associated to the first client, **characterized in that** said multi-client multi memory controller (2) is adapted to read in response to a client read request, RR, received from a second client (3-i) of said CG stored replication data entries from all virtual memory units, VMUs, of the row associated to the second client and to provide the most recently updated replication data entry to the second client.

2. The multi-client multi memory controller according to claim 1,
wherein said multi-client multi memory controller (2) has access to an operation mapping matrix stored in a data storage,
wherein said operation mapping matrix provides a mapping between the clients (3-i) of the client group and time slots, TSs, of memory devices (4-i) of said memory device array (MDA).

3. The multi-client multi memory controller (2) according to claim 1 or 2,
wherein each virtual memory unit, VMU, provides a bandwidth, BW, which corresponds to the aggregated bandwidth required by the read operation of the first client (3-i) and by the write operation of the second client (3-i) represented by the virtual memory unit, VMU, of said memory device array (MDA).

4. The multi-client multi memory controller (2) according to one of the preceding claims 1 - 3,
wherein said multi-client multi memory controller (2) is adapted to write in response to the client write request, WR, received from the first client (3-i) of said client group (CG) the updated information along with a time slot, TS, indicating a dedicated time period for a client memory operation as replication data entries to all virtual memory units, VMUs, of the column associated to the first client (3-i).

5. The multi-client multi memory controller (2) according to one of the preceding claims 1 - 4,
wherein said multi-client multi memory controller (2) is adapted to read in response to the client read request, RR, received from the second client (3-i) of said client group (CG) the stored replication data entries along with time slots, TSs, in all virtual memory units, VMUs, of the row associated to the second client (3-i) and is further adapted to select the most recently updated replication data entry on the basis of the time slots, TSs, of the read replication data entries, wherein the selected most updated replication data entry is provided to the second client (3-i).

6. The multi-client multi memory controller (2) according to one of the preceding claims 1 - 5,
wherein said multi-client multi memory controller (2) comprises for each memory device (4-i) of said memory device array (MDA) a set of FIFO subunits (5-i) provided to hold received client memory operation requests for each time slot, TS, dedicated to at least one client memory operation in the respective memory device (4-i).

7. The multi-client multi memory controller (2) according to claim 6,
wherein said multi-client multi memory controller (2) comprises for each memory device (4-i) of said memory device array (MDA) an arbiter (6-i) connected to the FIFO subunit (5-i) of said memory device (4-i),
wherein said arbiter (6-i) is adapted to generate a read command or a write command supplied to a memory controller (7-i) of said memory device (4-i) if a time slot, TS, comprises a pending client memory operation request.

8. The multi-client multi memory controller (2) according to claim 6,
wherein said multi-client multi memory controller (2) comprises a multicast fix connection matrix (8) which is adapted to hardwire client memory operation requests received from a client (3-i) to all time slots TS, FIFO subunits (5-i) that serve its data replication.

9. The multi-client multi memory controller (2) according to claim 7,
wherein said multi-client multi memory controller (2) comprises a unicast fix reverse connection matrix (9) adapted to translate every set of memory device (4-i) number and time slot, TS, number to a location in a cache memory (10) where the replication data entries and a coherency state are stored.

10. The multi-client multi memory controller (2) according to one of the preceding claims 1 - 9,
wherein said multi-client multi memory controller (2) comprises a coherency state write machine (11) adapted to read upon a write operation request replications states of the replication data entries and to update the replication states for the mapped memory devices (4-i).

11. The multi-client multi memory controller (2) according to one of the preceding claims 1 - 10,
wherein said multi-client multi memory controller (2) comprises a coherency state read machine (12) adapted to receive upon a read operation request all replication data entries from the mapped memory devices (4-i) and to select the most updated replication data entry.

12. A high speed distributed memory system (1) comprising:
a multi-client multi memory controller (2) according to one of the preceding claims 1 - 11,
a client group (CG) comprising a number (n) of clients (3-i) connected to said multi-client multi memory controller (2), wherein all clients (3-i) of said client group (CG) are adapted to read data from said memory device array (MDA) in the read operation and wherein a portion of the clients (3-i) of said client group (CG) are adapted to write data to said memory device array (MDA) in the write operation, and
a number (r) of memory devices (4-i) of a memory device array (MDA) connected to said multi-client multi memory controller (2).

13. A method for maintaining data coherency between databases distributed on memory devices (4-i) of a memory device array (MDA) represented by virtual memory units, VMUs, arranged in rows and columns,
wherein in response to a client write request, WR, updated information of a first client (3-i) is written as replication data entries to all virtual memory units, VMUs of a column associated to the first client (3-i),
wherein in response to a client read request, RR, stored replication data entries from all virtual memory units, VMUs, of a row associated to a second client (3-i) are read to provide the most recently updated replication data entry of the second client (3-i).

14. The method according to claim 13,
where in response to the client write request, WR, the updated information is written along with a time slot, TS, indicating a dedicated time period for a client memory operation as replication data entries to all virtual memory units, VMUs, of the column associated to the first client (3-i).

15. The method according to claim 13 or 14,
wherein in response to the client read request, RR, the stored replication data entries along with the time slots, TSs, in all virtual memory units, VMUs, of the row associated with the second client (3-i) are read and selected on the basis of the time slots, TSs, to provide the most recently updated replication data entry to the second client (3-i).

## Patentansprüche

1. Mehrfach-Client-Mehrfach-Speicher-Steuerung (2) zum Bereitstellen von Speicheroperationen für Clients einer Clientgruppe, CG,
wobei die Mehrfach-Client-Mehrfach-Speicher-Steuerung (2) Zugriff auf eine Speichervorrichtungsanordnung, MDA, hat, repräsentiert durch virtuelle Speichereinheiten, VMUs, angeordnet in Reihen und Spalten,
wobei die Anzahl von Reihen gleich der Anzahl (n) der Clients der CG ist, angepasst zum Lesen von Daten aus der MDA, und
die Anzahl von Spalten gleich der Anzahl (m) der Clients der CG ist, angepasst zum Schreiben von Daten in die MDA,
wobei die Mehrfach-Client-Mehrfach-Speicher-Steuerung (2) angepasst ist, als Reaktion auf eine Client-Schreibanforderung, WR, empfangen von einem ersten Client (3-i) der CG, aktualisierte Informationen des ersten Clients als Replikation-Dateneinträge in alle virtuellen Speichereinheiten, VMUs, der mit dem ersten Client assoziierten Spalte zu schreiben,
**dadurch gekennzeichnet, dass** die Mehrfach-Client-Mehrfach-Speicher-Steuerung (2) angepasst ist, als Reaktion auf eine Client-Leseanforderung, RR, empfangen von einem zweiten Client (3-i) der CG, gespeicherte Replikation-Dateneinträge aus allen virtuellen Speichereinheiten, VMUs, der mit dem zweiten Client assoziierten Reihe zu lesen und dem zweiten Client den zuletzt aktualisierten Replikation-Dateneintrag bereitzustellen.

2. Mehrfach-Client-Mehrfach-Speicher-Steuerung nach Anspruch 1,
wobei die Mehrfach-Client-Mehrfach-Speicher-Steuerung (2) Zugriff auf eine in einem Datenspeicher gespeicherte Operationsabbildungsmatrix hat,
wobei die Operationsabbildungsmatrix eine Abbildung zwischen den Clients (3-i) der Clientgruppe und Zeitschlitzen, TSs, von Speichervorrichtungen (4-i) der Speichervorrichtungsanordnung (MDA) bereitstellt.

3. Mehrfach-Client-Mehrfach-Speicher-Steuerung (2) nach Anspruch 1 oder 2,
wobei jede virtuelle Speichereinheit, VMU, eine Bandbreite, BW, bereitstellt, die mit der aggregierten Bandbreite korrespondiert, die von der Leseoperation des ersten Clients (3-i) und von der Schreiboperation des zweiten Clients (3-i), repräsentiert durch die virtuelle Speichereinheit, VMU, der Speichervorrichtungsanordnung (MDA), benötigt wird.

4. Mehrfach-Client-Mehrfach-Speicher-Steuerung (2) nach einem der vorstehenden Ansprüche 1-3,
wobei die Mehrfach-Client-Mehrfach-Speicher-Steuerung (2) angepasst ist, als Reaktion auf die Client-Schreibanforderung, WR, empfangen von dem ersten Client (3-i) der Clientgruppe (CG), die aktualisierten Informationen zusammen mit einem Zeitschlitz, TS, der eine dedizierte Zeitperiode für eine Client-Speicheroperation angibt, als Replikation-Dateneinträge in alle virtuellen Speichereinheiten, VMUs, der mit dem ersten Client (3-i) assoziierten Spalte zu schreiben.

5. Mehrfach-Client-Mehrfach-Speicher-Steuerung (2) nach einem der vorstehenden Ansprüche 1-4,
wobei die Mehrfach-Client-Mehrfach-Speicher-Steuerung (2) angepasst ist, als Reaktion auf die Client-Leseanforderung, RR, empfangen von dem zweiten Client (3-i) der Clientgruppe (CG), die gespeicherten Replikation-Dateneinträge zusammen mit Zeitschlitzen, TSs, in allen virtuellen Speichereinheiten, VMUs, der mit dem zweiten Client (3-i) assoziierten Reihe zu lesen, und ferner angepasst ist, den zuletzt aktualisierten Replikation-Dateneintrag auf der Basis der Zeitschlitze, TSs, der gelesenen Replikation-Dateneinträge auszuwählen, wobei der ausgewählte, zuletzt aktualisierte Replikation-Dateneintrag dem zweiten Client (3-i) bereitgestellt wird.

6. Mehrfach-Client-Mehrfach-Speicher-Steuerung (2) nach einem der vorstehenden Ansprüche 1-5,
wobei die Mehrfach-Client-Mehrfach-Speicher-Steuerung (2) für jede Speichervorrichtung (4-i) der Speichervorrichtungsanordnung (MDA) eine Menge von FIFO-Untereinheiten (5-i) umfasst, bereitgestellt zum Halten von empfangenen Client-Speicheroperationsanforderungen für jeden Zeitschlitz, TS, speziell vorgesehen für mindestens eine Client-Speicheroperation in der jeweiligen Speichervorrichtung (4-i).

7. Mehrfach-Client-Mehrfach-Speicher-Steuerung (2) nach Anspruch 6,
wobei die Mehrfach-Client-Mehrfach-Speicher-Steuerung (2) für jede Speichervorrichtung (4-i) der Speichervorrichtungsanordnung (MDA) eine mit der FIFO-Untereinheit (5-i) der Speichervorrichtung (4-i) verbundene Zuteilungsvorrichtung (6-i) umfasst,
wobei die Zuteilungsvorrichtung (6-i) angepasst ist, einen Lesebefehl oder einen Schreibbefehl zu erzeugen, der einer Speichersteuerung (7-i) der Speichervorrichtung (4-i) zugeführt wird, wenn ein Zeitschlitz, TS, eine anhängige Client-Speicheroperationsanforderung umfasst.

8. Mehrfach-Client-Mehrfach-Speicher-Steuerung (2) nach Anspruch 6,
wobei die Mehrfach-Client-Mehrfach-Speicher-Steuerung (2) eine Multicast-Festverbindungsmatrix (8) umfasst, die angepasst ist, von einem Client (3-i) empfangene Client-Speicheroperationsanforderungen mit den FIFO-Untereinheiten (5-i) aller Zeitschlitze, TS, die ihrer Datenreplikation dienen, fest zu verdrahten.

9. Mehrfach-Client-Mehrfach-Speicher-Steuerung (2) nach Anspruch 7,
wobei die Mehrfach-Client-Mehrfach-Speicher-Steuerung (2) eine Unicast-Festumkehrverbindungsmatrix (9) umfasst, die angepasst ist, jede Menge von Speichervorrichtung-(4-i)-Anzahl und Zeitschlitz- bzw. TS-Anzahl auf einen Ort in einem Zwischenspeicher (10), an dem die Replikation-Dateneinträge und ein Kohärenzstatus gespeichert sind, zu übersetzen.

10. Mehrfach-Client-Mehrfach-Speicher-Steuerung (2) nach einem der vorstehenden Ansprüche 1-9,
wobei die Mehrfach-Client-Mehrfach-Speicher-Steuerung (2) eine Maschine zum Schreiben eines Kohärenzstatus (11) umfasst, die angepasst ist, nach einer Schreiboperationsanforderung Replikationsstatus der Replikation-Dateneinträge zu lesen und die Replikationsstatus für die abgebildeten Speichervorrichtungen (4-i) zu aktualisieren.

11. Mehrfach-Client-Mehrfach-Speicher-Steuerung (2) nach einem der vorstehenden Ansprüche 1-10,
wobei die Mehrfach-Client-Mehrfach-Speicher-Steuerung (2) eine Maschine zum Lesen von Kohärenzstatus (12) umfasst, die angepasst ist, nach einer Leseoperationsanforderung alle Replikation-Dateneinträge von den abgebildeten Speichervorrichtungen (4-i) zu empfangen und den zuletzt aktualisierten Replikation-Dateneintrag auszuwählen.

12. Verteiltes Hochgeschwindigkeit-Speichersystem (1), umfassend:
eine Mehrfach-Client-Mehrfach-Speicher-Steuerung (2) nach einem der vorstehenden Ansprüche 1-11,
eine Clientgruppe (CG), umfassend eine Anzahl (n) von Clients (3-i), die mit der Mehrfach-Client-Mehrfach-Speicher-Steuerung (2) verbunden sind, wobei alle Clients (3-i) der Clientgruppe (CG) angepasst sind, Daten aus der Speichervorrichtungsanordnung (MDA) in der Leseoperation zu lesen und wobei ein Teil der Clients (3-i) der Clientgruppe (CG) angepasst ist, Daten in die Speichervorrichtungsanordnung (MDA) in der Schreiboperation zu schreiben, und
eine Anzahl (r) von Speichervorrichtungen (4-i) einer Speichervorrichtungsanordnung (MDA), verbunden mit der Mehrfach-Client-Mehrfach-Speicher-Steuerung (2).

13. Verfahren zum Aufrechterhalten von Datenkohärenz zwischen Datenbanken, die auf Speichervorrichtungen (4-i) einer Speichervorrichtungsanordnung (MDA) verteilt sind, repräsentiert durch virtuelle Speichereinheiten, VMUs, angeordnet in Reihen und Spalten,
wobei, als Reaktion auf eine Client-Schreibanforderung, WR, aktualisierte Informationen eines ersten Clients (3-i) als Replikation-Dateneinträge in alle virtuellen Speichereinheiten geschrieben werden,
VMUs einer Spalte mit dem ersten Client (3-i) assoziiert sind, wobei, als Reaktion auf eine Client-Leseanforderung, RR, gespeicherte Replikation-Dateneinträge aus allen virtuellen Speichereinheiten, VMUs, einer mit einem zweiten Client (3-i) assoziierten Reihe gelesen werden, um den zuletzt aktualisierten Replikation-Dateneintrag des zweiten Clients (3-i) bereitzustellen.

14. Verfahren nach Anspruch 13,
wobei, als Reaktion auf die Client-Schreibanforderung, WR, die aktualisierten Informationen zusammen mit einem Zeitschlitz, TS, der eine dedizierte Zeitperiode für eine Client-Speicheroperation angibt, als Replikation-Dateneinträge in alle virtuellen Speichereinheiten, VMUs, der mit dem ersten Client (3-i) assoziierten Spalte geschrieben werden.

15. Verfahren nach Anspruch 13 oder 14,
wobei, als Reaktion auf die Client-Leseanforderung, RR, die gespeicherten Replikation-Dateneinträge zusammen mit den Zeitschlitzen, TSs, in allen virtuellen Speichereinheiten, VMUs, der mit dem zweiten Client (3-i) assoziierten Reihe gelesen werden und auf der Basis der Zeitschlitze, TSs, ausgewählt werden, um dem zweiten Client (3-i) den zuletzt aktualisierten Replikation-Dateneintrag bereitzustellen.

## Revendications

1. Contrôleur multi-mémoire multi-client (2) permettant de fournir des opérations de mémoire à des clients d'un groupe de clients, CG,
ledit contrôleur multi-mémoire multi-client (2) ayant accès à un réseau de dispositifs de mémoire, MDA, représenté par des unités de mémoire virtuelle, VMU, agencées en rangées et en colonnes,
le nombre de rangées étant égal au nombre (n) des clients du CG adaptés à lire des données dans ledit MDA et
le nombre de colonnes étant égal au nombre (m) des clients dudit CG adaptés à écrire des données dans ledit MDA,
ledit contrôleur multi-mémoire multi-client (2) étant adapté à écrire, en réponse à une demande d'écriture, WR, de client reçue d'un premier client (3-i) dudit CG, des informations mises à jour dudit premier client sous forme d'entrées de données de duplication dans toutes les unités de mémoire virtuelle, VMU, de la colonne associée au premier client,
ledit contrôleur multi-mémoire multi-client (2) étant **caractérisé en ce qu'**il est adapté à lire, en réponse à une demande de lecture, RR, de client reçue d'un deuxième client (3-i) dudit CG, des entrées de données de duplication stockées dans toutes les unités de mémoire virtuelle, VMU, de la rangée associée au deuxième client, et à fournir l'entrée de données de duplication la plus récemment mise à jour au deuxième client.

2. Contrôleur multi-mémoire multi-client selon la revendication 1,
ledit contrôleur multi-mémoire multi-client (2) ayant accès à une matrice de mise en correspondance d'opérations stockée dans une unité de stockage de données,
dans lequel ladite matrice de mise en correspondance d'opérations fournit une mise en correspondance entre les clients (3-i) du groupe de clients et des créneaux temporels, TS, de dispositifs de mémoire (4-i) dudit réseau de dispositifs de mémoire (MDA).

3. Contrôleur multi-mémoire multi-client (2) selon la revendication 1 ou 2,
dans lequel chaque unité de mémoire virtuelle, VMU, fournit une bande passante, BW, qui correspond à la bande passante cumulée exigée par l'opération de lecture du premier client (3-i) et par l'opération d'écriture du deuxième client (3-i) représentées par l'unité de mémoire virtuelle, VMU, dudit réseau de dispositifs de mémoire (MDA).

4. Contrôleur multi-mémoire multi-client (2) selon l'une des revendications 1 à 3 précédentes,
ledit contrôleur multi-mémoire multi-client (2) étant adapté à écrire, en réponse à la demande d'écriture, WR, de client reçue du premier client (3-i) dudit groupe de clients (CG), les informations mises à jour conjointement avec un créneau temporel, TS, indiquant un intervalle de temps dédié pour une opération de mémoire de client, sous forme d'entrées de données de duplication, dans toutes les unités de mémoire virtuelle, VMU, de la colonne associée au premier client (3-i).

5. Contrôleur multi-mémoire multi-client (2) selon l'une des revendications 1 à 4 précédentes,
ledit contrôleur multi-mémoire multi-client (2) étant adapté à lire, en réponse à la demande de lecture, RR, de client reçue du deuxième client (3-i) dudit groupe de clients (CG), les entrées de données de duplication stockées conjointement avec des créneaux temporels, TS, dans toutes les unités de mémoire virtuelle, VMU, de la rangée associée au deuxième client (3-i), et étant adapté en outre à sélectionner l'entrée de données de duplication la plus récemment mise à jour sur la base des créneaux temporels, TS, des entrées de données de duplication lues, l'entrée de données de duplication la plus récemment mise à jour sélectionnée étant fournie au deuxième client (3-i).

6. Contrôleur multi-mémoire multi-client (2) selon l'une des revendications 1 à 5 précédentes,
ledit contrôleur multi-mémoire multi-client (2) comprenant, pour chaque dispositif de mémoire (4-i) dudit réseau de dispositifs de mémoire (MDA), un ensemble de sous-unités FIFO (5-i) destinées à contenir des demandes d'opération de mémoire de client reçues pour chaque créneau temporel, TS, dédié à au moins une opération de mémoire de client dans le dispositif de mémoire (4-i) respectif.

7. Contrôleur multi-mémoire multi-client (2) selon la revendication 6,
ledit contrôleur multi-mémoire multi-client (2) comprenant, pour chaque dispositif de mémoire (4-i) dudit réseau de dispositifs de mémoire (MDA), un arbitre (6-i) connecté à la sous-unité FIFO (5-i) dudit dispositif de mémoire (4-i),
dans lequel ledit arbitre (6-i) est adapté à générer un ordre de lecture ou un ordre d'écriture délivré à un contrôleur de mémoire (7-i) dudit dispositif de mémoire (4-i) si un créneau temporel, TS, comprend une demande d'opération de mémoire de client en instance.

8. Contrôleur multi-mémoire multi-client (2) selon la revendication 6,
ledit contrôleur multi-mémoire multi-client (2) comprenant une matrice de connexions fixes multicast (8) adaptée à transmettre, en logique câblée, des demandes d'opération de mémoire de client reçues d'un client (3-i) à toutes les sous-unités FIFO (5-i) des créneaux temporels, TS, qui desservent sa duplication de données.

9. Contrôleur multi-mémoire multi-client (2) selon la revendication 7,
ledit contrôleur multi-mémoire multi-client (2) comprenant une matrice de connexions inverses fixes unicast (9) adaptée à convertir chaque ensemble comprenant un numéro de dispositif de mémoire (4-i) et un numéro de créneau temporel, TS, en un emplacement dans une mémoire cache (10) où sont stockés les entrées de données de duplication et un état de cohérence.

10. Contrôleur multi-mémoire multi-client (2) selon l'une des revendications 1 à 9 précédentes,
ledit contrôleur multi-mémoire multi-client (2) comprenant une machine d'écriture d'états de cohérence (11) adaptée à lire, suite à une demande d'opération d'écriture, des états de duplication des entrées de données de duplication, et à mettre à jour les états de duplication pour les dispositifs de mémoire (4-i) mis en correspondance.

11. Contrôleur multi-mémoire multi-client (2) selon l'une des revendications 1 à 10 précédentes,
ledit contrôleur multi-mémoire multi-client (2) comprenant une machine de lecture d'états de cohérence (12) adaptée à recevoir, suite à une demande d'opération de lecture, toutes les entrées de données de duplication provenant des dispositifs de mémoire (4-i) mis en correspondance, et à sélectionner l'entrée de données de duplication la plus récemment mise à jour.

12. Système de mémoire répartie à grande vitesse (1), comprenant :
un contrôleur multi-mémoire multi-client (2) selon l'une des revendications 1 à 11 précédentes,
un groupe de clients (CG) comprenant un nombre (n) de clients (3-i) connectés audit contrôleur multi-mémoire multi-client (2), tous les clients (3-i) dudit groupe de clients (CG) étant adaptés à lire des données dans ledit réseau de dispositifs de mémoire (MDA) dans l'opération d'écriture, et une partie des clients (3-i) dudit groupe de clients (CG) étant adaptée à écrire des données dans ledit réseau de dispositifs de mémoire (MDA) dans l'opération d'écriture, et
un nombre (r) de dispositifs de mémoire (4-i) d'un réseau de dispositifs de mémoire (MDA) connectés audit contrôleur multi-mémoire multi-client (2).

13. Procédé de maintien d'une cohérence de données entre des bases de données réparties sur des dispositifs de mémoire (4-i) d'un réseau de dispositifs de mémoire (MDA) représenté par des unités de mémoire virtuelle, VMU, agencées en rangées et en colonnes,
dans lequel, en réponse à une demande d'écriture, WR, de client, des informations mises à jour d'un premier client (3-i) sont écrites sous forme d'entrées de données de duplication dans toutes les unités de mémoire virtuelle, VMU, d'une colonne associée au premier client (3-i),
dans lequel, en réponse à une demande de lecture, RR, de client, des entrées de données de duplication stockées dans toutes les unités de mémoire virtuelle, VMU, d'une rangée associée à un deuxième client (3-i) sont lues dans le but de fournir l'entrée de données de duplication la plus récemment mise à jour au deuxième client (3-i).

14. Procédé selon la revendication 13,
dans lequel, en réponse à la demande d'écriture, WR, de client, les informations mises à jour sont écrites, conjointement avec un créneau temporel, TS, indiquant un intervalle de temps dédié pour une opération de mémoire de client, sous forme d'entrées de données de duplication, dans toutes les unités de mémoire virtuelle, VMU, de la colonne associée au premier client (3-i).

15. Procédé selon la revendication 13 ou 14,
dans lequel, en réponse à la demande de lecture, RR, de client, les entrées de données de duplication stockées conjointement avec les créneaux temporels, TS, dans toutes les unités de mémoire virtuelle, VMU, de la rangée associée au deuxième client (3-i) sont lues et sélectionnées sur la base des créneaux temporels, TS, dans le but de fournir l'entrée de données de duplication la plus récemment mise à jour au deuxième client (3-i).
